# EUROPÄISCHE PATENTSCHRIFT

(11) **EP 2 897 118 B1**
(45) Veröffentlichungstag und Bekanntmachung des Hinweises auf die Patenterteilung: **30.10.2019**
(21) Anmeldenummer: 15150936.1
(22) Anmeldetag: 13.01.2015
(51) Int. Cl.: G08G 1/14, G01S 13/06, H04B 5/00

(54) **Verfahren und Vorrichtung zum Erfassen eines Belegungszustands eines Parkplatzes**
Method and device for detecting the occupation of a parking place
Procédé et dispositif de détection d'un état d'occupation d'une aire de stationnement

(30) Priorität: 20.01.2014 DE 102014200898
(43) Veröffentlichungstag der Anmeldung: 22.07.2015
(73) Patentinhaber: Koch, Georg, 85716 Unterschleißheim (DE)
(72) Erfinder: Koch, Georg, 85716 Unterschleißheim (DE); Molthan, Helge, 86415 Mering (DE)
(74) Vertreter: Purschke, Frank

(56) Entgegenhaltungen:
- JP-A- H1 095 338
- US-A1- 2002 041 232
- US-A1- 2007 152 818
- US-A1- 2008 036 597
- US-A1- 2008 117 043

## Beschreibung

Die Erfindung betrifft ein Verfahren und eine Vorrichtung zum Erfassen eines Belegungszustands eines Parkplatzes. Die Erfindung betrifft ferner ein Computerprogramm.

Auf öffentlichen Parkplätzen und Parkhäusern muss häufig die Belegung der Parkplätze überwacht werden. Dies gilt sowohl für Einzelparkplätze als auch für Parkreihen. Künftig wird auch die Belegungsüberwachung von LKW-Parkplätzen eine große Bedeutung erlangen. Hierbei steht "LKW" für Lastkraftwagen. Es besteht insbesondere ein Bedarf, nicht nur die Belegung an konkreten Punkten, sondern auch die Belegung eines Parkstreifens mit belegter Länge und freien Lücken zu ermitteln.

US 2007/0152818 A1 lehrt eine Detektionseinrichtung für Eindringlinge. Diese beruht auf dem veränderten Empfang einer elektrischen Welle, die mit einem Leckwellenleiter empfangen wird, der neben einem sendenden Leckwellenleiter angeordnet ist. US 2008/117043 A1 lehrt eine Vorrichtung zum Erkennen der Anwesenheit eines Objekts in einer Erfassungszone. US 2002/041232 A1 lehrt ein kabelloses FM-CW-Radar zur Erkennung und Ortung von Eindringlingen im Außenbereich. US 2008/036597 A1 lehrt ein Einbruchsicherungssystem und -verfahren, um einen Eindringling entlang der Länge eines Sensorkabels genau zu lokalisieren. JP H10 95338 A lehrt eine Hinderniserkennungsvorrichtung, die einen Leckübertragungspfad entlang einer Straße oder Linie auf beiden Seiten umfasst, um ein Hindernis zu erkennen.

Die der Erfindung zugrunde liegende Aufgabe kann daher darin gesehen werden, ein Verfahren zum Erfassen eines Belegungszustands eines Parkplatzes bereitzustellen.

Die der Erfindung zugrunde liegende Aufgabe kann auch darin gesehen werden, eine Vorrichtung zum Erfassen eines Belegungszustands eines Parkplatzes bereitzustellen.

Die der Erfindung zugrunde liegende Aufgabe kann auch darin gesehen werden, ein entsprechendes Computerprogramm anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Erfassen eines Belegungszustands eines Parkplatzes bereitgestellt, wobei der Parkplatz einen ersten und einen zweiten Leckwellenleiter umfasst, umfassend die folgenden Schritte:
- Einspeisen eines Sendesignals aufweisend eine vorbestimmte Sendeenergie in den ersten Leckwellenleiter, so dass zumindest ein Teil der Sendeenergie von dem ersten Leckwellenleiter in eine Umgebung des ersten Leckwellenleiters abgestrahlt wird, wobei der abgestrahlte Teil an Sendeenergie zumindest teilweise in den zweiten Leckwellenleiter eingekoppelt wird, so dass sich im zweiten Leckwellenleiter ein auf der eingekoppelten Sendeenergie basierendes Empfangssignal ausbreitet,
- Messen des Empfangssignals und
- Bestimmen des Belegungszustandes basierend auf dem gemessenen Empfangssignal.

Gemäß einem weiteren Aspekt wird eine Vorrichtung zum Erfassen eines Belegungszustands eines Parkplatzes bereitgestellt, umfassend:
- einen ersten und einen zweiten Leckwellenleiter,
- einen Signalsender zum Einspeisen eines Sendesignals aufweisend eine vorbestimmte Sendeenergie in den ersten Leckwellenleiter, so dass zumindest ein Teil der Sendeenergie von dem ersten Leckwellenleiter in eine Umgebung des ersten Leckwellenleiters abgestrahlt wird, wobei der abgestrahlte Teil an Sendeenergie zumindest teilweise in den zweiten Leckwellenleiter eingekoppelt wird, so dass sich im zweiten Leckwellenleiter ein auf der eingekoppelten Sendeenergie basierendes Empfangssignal ausbreitet,
- einen Signalempfänger zum Messen des Empfangssignals und
- eine Verarbeitungseinrichtung zum Bestimmen des Belegungszustands basierend auf dem gemessenen Empfangssignal.

Der Teil an Sendeenergie, der in den zweiten Leckwellenleiter eingekoppelt wird, ist insbesondere abhängig davon, ob sich in der Umgebung des ersten und des zweiten Leckwellenleiters, also auf dem Parkplatz, ein Fahrzeug befindet oder nicht. Denn ein Fahrzeug weist in der Regel Oberflächen und/oder Materialien auf, die die abgestrahlte Sendeenergie, die ja letztlich insbesondere einem elektromagnetischen (EM)-Feld entspricht, zumindest teilweise in Richtung des zweiten Leckwellenleiters reflektieren. Das heißt also insbesondere, dass aufgrund der Reflexion mehr Sendeenergie in den zweiten Leckwellenleiter eingekoppelt wird als ohne die Reflexion, also ohne ein geparktes Fahrzeug. Somit ändert sich das Empfangssignal, insbesondere in seiner Amplitude, abhängig davon, ob ein Fahrzeug vorhanden ist oder nicht.

Es gibt stets einen Grundanteil an eingekoppelter Sendenergie, der auf einer direkten Übertragung von dem ersten zum zweiten Leckwellenleiter beruht, also ohne eine Reflexion. Dieser Grundanteil ist unabhängig davon, ob ein Fahrzeug parkt oder nicht, also ob der Parkplatz belegt ist oder nicht.

Die Erfindung stellt insbesondere den Vorteil einer einfachen Skalierbarkeit bereit. Denn für große oder mehrere Parkplätze oder Parkstreifen aufweisend mehrere Parkplätze müssen lediglich die Leckwellenleiter entsprechend dimensioniert werden, insbesondere in ihrer Länge entsprechend ausgelegt sein. Es ist ein einfacher Aufbau bewirkt. Des Weiteren ist in vorteilhafter Weise eine einfache Nachrüstbarkeit von bereits vorhandenen Parkplätzen ermöglicht. Ferner müssen auch nur geringe Herstellungskosten aufgebracht werden. Ferner kann der Belegungszustand besonders empfindlich erfasst werden, da das Fahrzeug aufgrund seiner üblichen Dimensionen einen im Verhältnis zum Grundanteil größeren Anteil der abgestrahlten Sendeenergie in Richtung des zweiten Leckwellenleiters reflektieren wird, sodass sich ein Empfangssignal bei einem belegten Parkplatz deutlich von einem Empfangssignal bei einem unbelegten Parkplatz unterscheidet.

Ein Belegungszustand kann beispielsweise ein belegter Zustand sein, also ein Zustand, in welchem ein Fahrzeug auf dem Parkplatz parkt. Ein Belegungszustand kann insbesondere ein unbelegter Zustand sein, also ein Zustand, in welchem kein Fahrzeug auf dem Parkplatz parkt.

In einer Ausführungsform kann vorgesehen sein, dass ein jeweiliger Belegungszustand von mehreren Parkplätzen, insbesondere von einem Parkstreifen aufweisend mehrere Parkplätze, erfasst wird.

Ein Leckwellenleiter im Sinne der vorliegenden Erfindung bezeichnet insbesondere einen Wellenleiter für elektromagnetische Wellen, wobei der Wellenleiter eine bestimmte Durchlässigkeit für elektromagnetische Wellen aufweist. Es ist also bei einem Leckwellenleiter erwünscht, dass die eingekoppelte Energie in Form eines elektromagnetischen Feldes (EM-Feld) nicht nur an den Enden des Leckwellenleiters, sondern zu einem bestimmten Anteil auch auf einer vorbestimmten Länge des Leckwellenleiters, insbesondere auf seiner gesamten Länge, eintreten und/oder austreten kann.

Der erste Leckwellenleiter, in welchem das Sendesignal eingespeist wird, kann vorzugsweise als ein Sendeleckwellenleiter bezeichnet werden. Der zweite Leckwellenleiter, in welchem das Empfangssignal gemessen wird, kann vorzugsweise als ein Empfangsleckwellenleiter bezeichnet werden.

Nach einer Ausführungsform kann vorgesehen sein, dass zumindest einer der beiden Leckwellenleiter ein Schlitzkabel ist. Das heißt also insbesondere, dass der erste Leckwellenleiter und/oder der zweite Leckwellenleiter jeweils als ein Schlitzkabel gebildet sind respektive ein solches ist.

Nach einer Ausführungsform kann zumindest einer der beiden Leckwellenleiter als eine Schlitzantenne gebildet sein.

Nach einer Ausführungsform kann vorgesehen sein, dass die beiden Leckwellenleiter gleich oder vorzugsweise unterschiedlich gebildet sind.

In einer Ausführungsform kann vorgesehen sein, dass die beiden Leckwellenleiter parallel zueinander angeordnet sind. Eine parallele Anordnung umfasst insbesondere noch eine Anordnung, in welcher die beiden Leckwellenleiter zwar nicht perfekt parallel zueinander angeordnet oder ausgerichtet sind, aber aufgrund der nicht perfekten Ausrichtung einen Winkel von maximal 10 Grad bilden.

Nach einer Ausführungsform beträgt ein Abstand zwischen den beiden Leckwellenleitern zwischen 90 cm und 110 cm. Der Abstand kann beispielsweise variabel, insbesondere zwischen 90 cm und 110 cm, über die Länge der beiden Leckwellenleiter sein.

In einer weiteren Ausführungsform beträgt ein Abstand von den beiden Leckwellenleitern zu einer Stellfläche oder Parkfläche des Parkplatzes zwischen 5 cm und 20 cm. Die beiden Leckwellenleiter sind also insbesondere unterhalb der Parkfläche in einem Abstand zwischen 5 cm und 20 cm zu der Parkfläche angeordnet.

Der Abstand der beiden Leckwellenleiter zueinander und/oder der Abstand der beiden Leckwellenleiter zu der Stellfläche hängen insbesondere vom konkreten Einzelfall ab. Insbesondere hängt der Abstand von einem Füll- oder Bodenmaterial des Parkplatzes ab. Insbesondere hängt der Abstand zur Stellfläche davon ab, welche Masse die Fahrzeuge haben, die üblicherweise auf dem Parkplatz parken. Denn ein schwereres Fahrzeug übt auf eine Stellfläche mehr Druck auf als ein leichteres Fahrzeug. Je tiefer die Leckwellenleiter unter der Stellfläche sind, desto geschützter sind diese üblicherweise vor mechanischen Beschädigungen. Ein größerer Abstand kann eine Verschlechterung der Auflösung der Messung bewirken. Es ist also ein Kompromiss zu finden zwischen dem Schutz vor mechanischen Belastungen und einer ausreichend guten Auflösung. Der Kompromiss hängt insbesondere vom konkreten Einzelfall ab.

Nach einer Ausführungsform sind die Leckwellenleiter unter einer Parkfläche oder Stellfläche des Parkplatzes angeordnet. Dort sind sie in vorteilhafter Weise besonders gut gegen äußere Einflüsse und sich daraus potenziell ergebende Beschädigungen geschützt. Auf der Parkfläche oder Stellfläche kann ein Fahrzeug parken.

In einer Ausführungsform ist der Leckwellenleiter, insbesondere der erste und/oder der zweite Leckwellenleiter als ein koaxiales Schlitzkabel ausgebildet. Das heißt also insbesondere, dass ein Koaxialkabel als ein Schlitzkabel ausgebildet ist. Ein Koaxialkabel weist insbesondere einen Innenleiter und einen Außenleiter auf. Im Außenleiter sind vorzugsweise Schlitze oder Öffnungen gebildet.

Nach einer Ausführungsform weist der Leckwellenleiter, insbesondere der erste und/oder der zweite Leckwellenleiter, eine Antennen- oder Richtcharakteristik auf.

In einer weiteren Ausführungsform sind die beiden Leckwellenleiter insbesondere derart angeordnet, dass sie mit ihrer entsprechend der Antennencharakteristik gebildeten Hauptabstrahlrichtung in Richtung weg von einer Parkfläche oder Stellfläche für ein Fahrzeug zeigen. Dadurch zeigt ihre Hauptabstrahlrichtung in Richtung eines Fahrzeugbodens eines auf der Stellfläche parkenden Fahrzeugs. Das heißt also insbesondere, dass ein Hauptanteil der abgestrahlten Energie von dem ersten Leckwellenleiter in Richtung des Fahrzeugbodens abgestrahlt wird. Die Richtung des von dem Fahrzeugboden reflektierten Teils entspricht im Wesentlichen der Hauptrichtung der Antennenkeule des zweiten Leckwellenleiters, sodass die abgestrahlte Sendeenergie indirekt über den Fahrzeugboden in den zweiten Leckwellenleiter eingekoppelt werden kann.

Ein Signal, also das Sendesignal und/oder das Empfangssignal, kann insbesondere ein elektromagnetisches (EM)-Signal sein. Insbesondere kann das Signal ein HF-Signal sein. HF steht für Hochfrequenz und bezeichnet insbesondere einen Frequenzbereich von 3 MHz bis 300 GHz, vorzugsweise von 1 GHz bis 100 GHz.

Die abgestrahlte Sendeenergie entspricht insbesondere einem Signal, welches in den zweiten Leckwellenleiter eingekoppelt wird. Insbesondere bei einem EM-Signal strahlt der erste Leckwellenleiter ein elektromagnetisches Feld ab. Bei einem Sendesignal als HF-Signal strahlt der erste Leckwellenleiter ein HF-Feld ab. Das abgestrahlte HF-Feld wird dann in den zweiten Leckwellenleiter zumindest teilweise eingekoppelt und wird bei Vorhandensein eines parkenden Autos von dem parkenden Auto zumindest teilweise reflektiert in Richtung des zweiten Leckwellenleiters und dort eingekoppelt.

Das Bestimmen umfasst insbesondere eine Auswertung des zeitlichen Verlaufs der Amplitude des Empfangssignals und/oder eine Laufzeitmessung des Empfangssignals. Für eine Laufzeitmessung wird insbesondere der Zeitpunkt des Einspeisens des Sendesignals als Startzeitpunkt, also als t = 0, definiert.

Nach einer Ausführungsform kann vorgesehen sein, dass bei einem bekannten Belegungszustand das Sendesignal eingespeist und das Empfangssignal als Referenzsignal gemessen wird, wobei bei einem unbekannten Belegungszustand das Referenzsignal mit dem gemessenen Empfangssignal verglichen wird und abhängig von dem Vergleich der Belegungszustand bestimmt wird.

Es wird also insbesondere das Referenzsignal mit dem Empfangssignal verglichen und basierend auf dem Vergleich der Belegungszustand bestimmt. Eine Abweichung des gemessenen Empfangssignals von dem Referenzsignal signalisiert einen anderen Belegungszustand als der bekannte Belegungszustand beim Messen des Referenzsignals. Die Messung des Referenzsignals kann insbesondere bei einem belegten oder einem unbelegten Parkplatz durchgeführt werden. Insbesondere können entsprechende Messungen sowohl bei einem belegten als auch bei einem unbelegten Parkplatz erfolgen, sodass zwei Referenzsignale gemessen werden, die dann in vorteilhafter Weise insbesondere für das Bestimmen des Belegungszustandes verwendet werden können. Dadurch ist in vorteilhafter Weise eine noch genauere Bestimmung des Belegungszustandes ermöglicht. Das Messen des Referenzsignals bei einem bekannten Belegungszustand wird insbesondere bei Inbetriebnahme der Vorrichtung durchgeführt, kann vorzugsweise anstelle oder zusätzlich auch im Betrieb der Vorrichtung durchgeführt werden. Das Referenzsignal wird vorzugsweise gespeichert, insbesondere in einer Speichervorrichtung, die insbesondere von der Vorrichtung umfasst sein kann.

Der Vorteil ist insbesondere darin zu sehen, dass Unregelmäßigkeiten einer Umgebungsbeschaffenheit der Leckwellenleiter (zum Beispiel aufgrund unterschiedlicher Untergründe, unterschiedlichem Füllmaterial des Untergrunds, in einer Nähe der Leckwellenleiter verlegte metallische Leitungen, schwankender Verlegungstiefe der Leckwellenleiter) ausgeglichen werden können.

Gemäß einer weiteren Ausführungsform kann vorgesehen sein, dass bei einem unbekannten Belegungszustand das gemessene Empfangssignal über seine Signallänge mit einem konstanten Wert derart korrigiert wird, bis das korrigierte Empfangssignal an zumindest einem lokalen Minimum dem Referenzsignal entspricht.

Ein lokales Minimum im Empfangssignal zeigt einen unbelegten Parkplatz an, da hier der reflektierte Anteil der abgestrahlten Energie im Empfangssignal fehlt. Das lokale Minimum kann somit zur Korrektur von Umwelteinflüssen verwendet werden. Die vorstehenden Ausführungen gelten analog für mehrere lokale Minima im Empfangssignal.

Das heißt also insbesondere, dass ein Referenzsignal bei einem unbelegten Parkplatz gemessen wird. Dieses Referenzsignal wird dann vom Empfangssignal bei unbekanntem Belegungszustand abgezogen. Insbesondere werden vor dem Abziehen das Referenzsignal und das Empfangssignal logarithmisiert. An den Stellen im abgezogenen Empfangssignal, an denen ein lokales Maximum oder ein Signal, das deutlich über einem Minimum liegt, vorliegt, befindet sich am entsprechenden Ort des Parkplatzes ein Fahrzeug. Allgemein und losgelöst von diesem konkreten Ausführungsbeispiel werden vor einer Bearbeitung der Signale (zum Beispiel: Empfangssignale, Referenzsignale) diese vorzugsweise logarithmisiert.

Gemäß der Erfindung ist vorgesehen, dass zum Erfassen des Belegungszustandes mehrere Sendesignale mit verschiedenen zeitlichen Abständen und/oder mit verschiedenen Sendefrequenzen in den ersten Leckwellenleiter eingespeist werden und entsprechend mehrere sich im zweiten Leckwellenleiter ausbreitende Empfangssignale gemessen werden, wobei der Belegungszustand basierend auf den mehreren gemessenen Empfangssignalen bestimmt wird.

Dadurch kann in vorteilhafter Weise ein Einfluss von möglicherweise vorhandenen hochfrequenten Störsignalen abgeschwächt werden. Insbesondere kann eine gegenseitige Beeinflussung mit anderen technischen Systemen minimiert werden. Dies aufgrund des Vorsehens von verschiedenen zeitlichen Abständen und/oder von verschiedenen Sendefrequenzen der Sendesignale, die in dem ersten Leckwellenleiter eingespeist werden. Es wird also insbesondere ein zeitlicher Abstand zwischen zwei Sendesignalen von Sendesignal zu Sendesignal geändert. Insbesondere wird eine Sendefrequenz der Sendesignale geändert. Das Ändern der Sendefrequenz kann auch als ein "Frequenzhopping" bezeichnet werden. Dass der zeitliche Abstand geändert wird, kann insbesondere auch als ein Ändern einer Wiederholfrequenz oder einer Einspeisefrequenz bezeichnet werden. Mit entsprechenden Auswertealgorithmen, basierend auf welchen die gemessenen Empfangssignale verarbeitet werden, kann in vorteilhafter Weise anschließend auf eine Plausibilität der einzelnen Empfangssignale geprüft und eine Belegung oder ein Belegungszustand des Parkplatzes ermittelt werden. Eine Sendefrequenz kennzeichnet insbesondere eine Frequenz des Sendesignals.

Nach einer Ausführungsform kann vorgesehen sein, dass das Sendesignal als ein Sendeimpuls gebildet ist. Ein Sendeimpuls im Sinne der vorliegenden Erfindung weist insbesondere eine zeitliche Dauer von vorzugsweise 30 ps bis insbesondere 3 ns auf.

Insbesondere werden mehrere Sendeimpulse eingespeist. Vorzugsweise wird eine Einspeisefrequenz der eingespeisten Sendeimpulse geändert. Vorzugsweise wird bei mehreren eingespeisten Sendeimpulsen eine jeweilige zeitliche Dauer der einzelnen Sendeimpulse geändert.

Nach noch einer Ausführungsform kann vorgesehen sein, dass bei dem bekannten Belegungszustand mehrere Sendesignale mit verschiedenen Sendefrequenzen eingespeist werden und entsprechende Empfangssignale als Referenzsignale gemessen werden, wobei bei einem unbekannten Belegungszustand mehrere Sendesignale mit den Frequenzen der Sendesignale bei der Messung für die Referenzsignale eingespeist werden, so dass entsprechend mehrere Empfangssignale gemessen werden, die mit den Referenzsignalen entsprechend der Sendefrequenz verglichen werden, wobei abhängig von den Vergleichen der Belegungszustand bestimmt wird.

Dies bewirkt in vorteilhafter Weise eine weitere Erhöhung einer Störsicherheit, da frequenzselektive Störungen erkannt und ausgeblendet werden können.

So kann sich beispielsweise für eine spezifische Sendefrequenz ein Störsender in der Umgebung des Parkplatzes befinden, der das entsprechende Empfangssignal verfälscht. Da aber mehrere Sendefrequenzen verwendet werden, kann dies erkannt werden. Denn üblicherweise verläuft die Messung bei den anderen Sendefrequenzen in der Regel ungestört vom Störsender. Insbesondere können anstelle oder zusätzlich zum Vergleich mit den Referenzsignalen die mehrere Empfangssignale untereinander oder miteinander verglichen werden, wobei basierend den Vergleichen der Belegungszustand bestimmt werden kann.

Ausführungen, die im Zusammenhang mit der Vorrichtung gemacht wurden, gelten analog für Ausführungsformen des Verfahrens und umgekehrt. Das heißt also insbesondere, dass sich Ausführungsformen der Vorrichtung entsprechend aus Ausführungsformen des Verfahrens ergeben und umgekehrt. Vorrichtungsmerkmale ergeben sich insbesondere aus entsprechenden Verfahrensmerkmalen und umgekehrt.

Nach einer Ausführungsform kann vorgesehen sein, dass die Verarbeitungseinrichtung ausgebildet ist, das gemessene Empfangssignal mit einem Referenzsignal zu vergleichen, um abhängig von dem Vergleich den Belegungszustand zu bestimmen.

Gemäß einer weiteren Ausführungsform kann vorgesehen sein, dass die Verarbeitungseinrichtung ausgebildet ist, das gemessene Empfangssignal über seine Signallänge mit einem konstanten Wert derart zu korrigieren, bis das korrigierte Empfangssignal an zumindest einem lokalen Minimum dem Referenzsignal entspricht.

Nach noch einer Ausführungsform kann vorgesehen sein, dass der Signalsender ausgebildet ist, zum Erfassen des Belegungszustandes mehrere Sendesignale mit verschiedenen zeitlichen Abständen und/oder mit verschiedenen Sendefrequenzen in den ersten Leckwellenleiter einzuspeisen, wobei der Signalempfänger ausgebildet ist, entsprechend mehrere sich im zweiten Leckwellenleiter ausbreitende Empfangssignale zu messen, wobei die Verarbeitungseinrichtung ausgebildet ist, den Belegungszustand basierend auf den mehreren gemessenen Empfangssignalen zu bestimmen.

Nach einer weiteren Ausführungsform kann vorgesehen sein, dass die Verarbeitungseinrichtung ausgebildet ist, den Signalsender und den Signalempfänger zu steuern.

Nach einer anderen Ausführungsform kann vorgesehen sein, dass der Leckwellenleiter (insbesondere der erste und/oder der zweite Leckwellenleiter) einen Abschlusswiderstand an einem Ende des Leckwellenleiters umfasst. An einem solchen Abschlusswiderstand kann in vorteilhafter Weise ein Signal, zum Beispiel das Empfangssignal oder das Sendesignal, absorbiert werden. Der Abschlusswiderstand ist also entsprechend ausgebildet, das Empfangssignal respektive das Sendesignal zu absorbieren. Der Abschlusswiderstand schließt somit insbesondere den Leckwellenleiter ab.

Nach einer weiteren Ausführungsform wird das Sendesignal einem Ende des Leckwellenleiters eingespeist. Das heißt also insbesondere, dass an diesem Ende der Signalsender angeordnet oder angeschlossen ist. An einem diesem Ende gegenüberliegenden weiteren Ende kann vorzugsweise der Abschlusswiderstand angeordnet oder angeschlossen sein.

In einer anderen Ausführungsform wird das Empfangssignal an einem Ende des Leckwellenleiters gemessen. Das heißt also insbesondere, dass an diesem Ende der Signalempfänger angeordnet oder angeschlossen ist. An einem diesem Ende gegenüberliegenden weiteren Ende kann vorzugsweise der Abschlusswiderstand angeordnet oder angeschlossen sein.

Die Leckwellenleiter weisen somit vorzugsweise jeweils zwei gegenüberliegende Enden auf, wobei an dem einen Ende das Sendesignal eingespeist respektive das Empfangssignal gemessen wird (Signalsender respektive Signalempfänger sind vorzugsweise an diesem Ende angeordnet oder angeschlossen) und wobei an dem anderen Ende der Abschlusswiderstand angeordnet oder angeschlossen ist.

Gemäß einem weiteren Aspekt wird ein Computerprogramm bereitgestellt, welches Programmcode zur Durchführung des Verfahrens zum Erfassen eines Belegungszustands eines Parkplatzes umfasst, wenn das Computerprogramm auf der Verarbeitungseinrichtung ausgeführt wird, wobei die Verarbeitungseinrichtung ausgebildet ist, den Signalsender und den Signalempfänger zu steuern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei
- FIG 1: ein Ablaufdiagramm eines Verfahrens zum Erfassen eines Belegungszustands eines Parkplatzes,
- FIG 2: ein Ablaufdiagramm eines weiteren Verfahrens zum Erfassen eines Belegungszustands eines Parkplatzes,
- FIG 3: eine Vorrichtung zum Erfassen eines Belegungszustands eines Parkplatzes,
- FIG 4: ein Parkplatz mit einer Vorrichtung zum Erfassen eines Belegungszustands des Parkplatzes,
- FIG 5: mehrere Parkplätze mit einer Vorrichtung zum Erfassen eines jeweiligen Belegungszustands der Parkplätze und
- FIG 6: einen zeitlichen Verlauf eines Sendesignals und eines Empfangssignals bei der Vorrichtung zum Erfassen eines jeweiligen Belegungszustands der mehreren Parkplätze gemäß FIG 5.
zeigen.

Im Folgenden können für gleiche Merkmale gleiche Bezugszeichen verwendet werden.

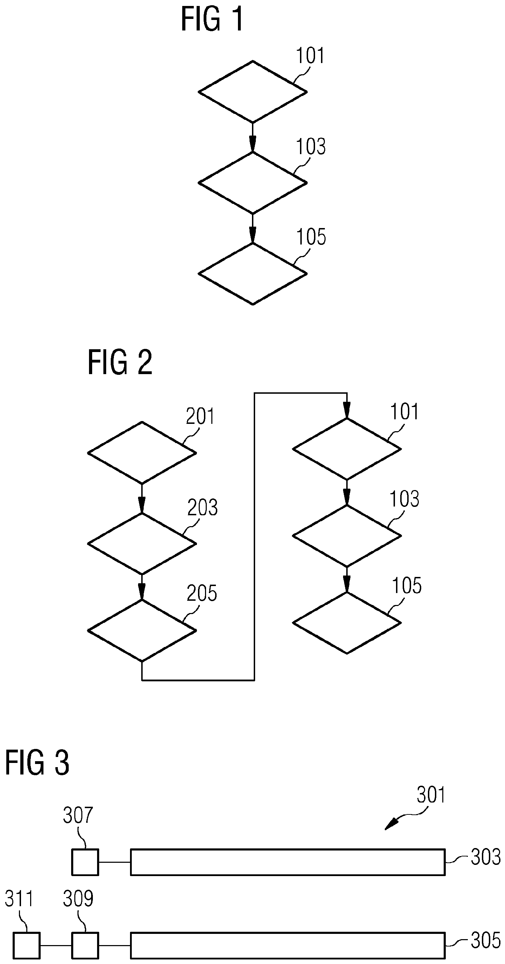

FIG 1 zeigt ein Ablaufdiagramm eines Verfahrens zum Erfassen eines Belegungszustands eines Parkplatzes, wobei der Parkplatz einen ersten und einen zweiten Leckwellenleiter umfasst.

Gemäß einem Schritt 101 wird ein Sendesignal aufweisend eine vorbestimmte Sendeenergie in den Leckwellenleiter eingespeist, sodass zumindest ein Teil der Sendeenergie von dem ersten Leckwellenleiter in eine Umgebung des ersten Leckwellenleiters abgestrahlt wird, wobei der abgestrahlte Teil an Sendeenergie zumindest teilweise in den zweiten Leckwellenleiter eingekoppelt wird, sodass sich im zweiten Leckwellenleiter ein auf der eingekoppelten Sendeenergie basierendes Empfangssignal ausbreitet.

Gemäß einem Schritt 103 wird das Empfangssignal gemessen. In einem Schritt 105 wird der Belegungszustand basierend auf dem gemessenen Empfangssignal bestimmt.

FIG 2 zeigt ein Ablaufdiagramm eines weiteren Verfahrens zum Erfassen eines Belegungszustands eines Parkplatzes, wobei der Parkplatz einen ersten und einen zweiten Leckwellenleiter umfasst.

In einem Schritt 201 wird bei einem bekannten Belegungszustand des Parkplatzes ein Sendesignal in den ersten Leckwellenleiter eingespeist, sodass zumindest ein Teil der Sendeenergie von dem ersten Leckwellenleiter in eine Umgebung des ersten Leckwellenleiters abgestrahlt wird, wobei der Teil an abgestrahlter Sendeenergie zumindest teilweise in den zweiten Leckwellenleiter eingekoppelt wird, sodass sich im zweiten Leckwellenleiter ein auf der eingekoppelten Sendeenergie basierendes Empfangssignal ausbreitet. In einem Schritt 203 wird das Empfangssignal gemessen. Da der Belegungszustand bei dieser Messung bekannt ist, kann das gemessene Empfangssignal als ein Referenzsignal gemäß einem Schritt 205 gespeichert werden, um es für weitere Messungen bei einem unbekannten Belegungszustand als Referenz zu verwenden.

So ist also gemäß der in FIG 2 beschriebenen Ausführungsform vorgesehen, dass zeitlich nach dem Schritt 205 Schritte 101, 103 und 105 analog zu den Schritten 101, 103 und 105 gemäß FIG 1 durchgeführt werden, wobei im Schritt 105 gemäß der FIG 2 das Referenzsignal mit dem gemessenen Empfangssignal gemäß dem Schritt 103 verglichen wird und abhängig von dem Vergleich der Belegungszustand des Parkplatzes bestimmt wird.

FIG 3 zeigt eine Vorrichtung 301 zum Erfassen eines Belegungszustands eines Parkplatzes (nicht gezeigt).

Die Vorrichtung 301 umfasst einen ersten Leckwellenleiter 303 und einen zweiten Leckwellenleiter 305. Ferner ist ein Signalsender 307 vorgesehen, der ausgebildet ist, ein Sendesignal aufweisend eine vorbestimmte Sendeenergie in den ersten Leckwellenleiter 303 einzuspeisen. Bei einer solchen Einspeisung wird zumindest ein Teil der Sendeenergie von dem ersten Leckwellenleiter 303 in eine Umgebung des ersten Leckwellenleiters 303 abgestrahlt, wobei der Teil an abgestrahlter Sendeenergie zumindest teilweise in den zweiten Leckwellenleiter 305 eingekoppelt wird. Dies bewirkt, dass sich in dem zweiten Leckwellenleiter 305 ein auf der eingekoppelten Sendeenergie basierendes Empfangssignal ausbreitet.

Die Vorrichtung 301 umfasst ferner einen Signalempfänger 309, der ausgebildet ist, das sich ausbreitende Empfangssignal zu messen. Ferner umfasst die Vorrichtung 301 eine Verarbeitungseinrichtung 311, die ausgebildet ist, den Belegungszustand des Parkplatzes basierend auf dem gemessenen Empfangssignal zu bestimmen. Die Verarbeitungseinrichtung 311 ist insbesondere ausgebildet, den Signalsender 307 zu steuern, so dass der Signalsender 307 entsprechend der Steuerung ein oder mehrere Sendesignal einspeist.

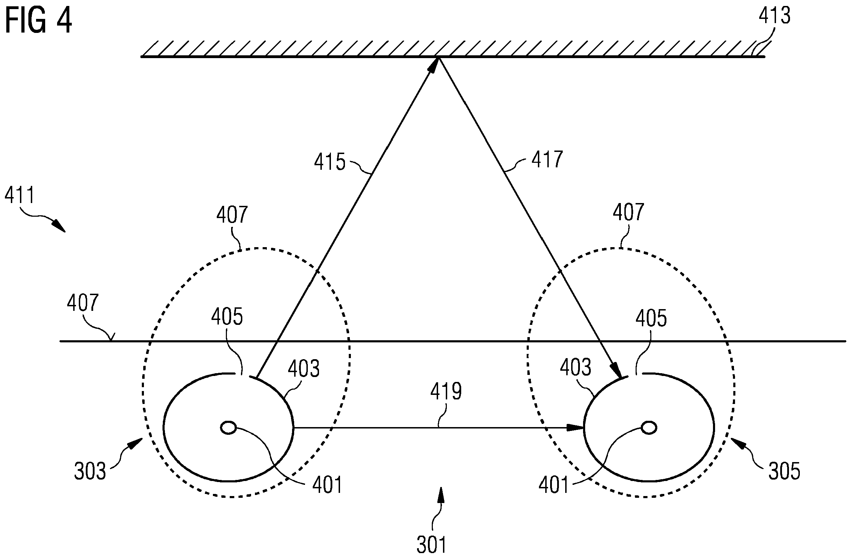

FIG 4 zeigt einen Parkplatz 411 mit einem darauf parkenden Fahrzeug, wobei der Übersicht halber nur ein Fahrzeugboden 413 schematisch dargestellt ist. Das Fahrzeug parkt auf einer Parkfläche 409 des Parkplatzes 411, wobei die Parkfläche 409 auch als eine Stellfläche bezeichnet werden kann.

Zum Erfassen des Belegungszustands des Parkplatzes 411 ist eine Vorrichtung 301 zum Erfassen eines Belegungszustands eines Parkplatzes vorgesehen. Die Vorrichtung 301 ist im Wesentlichen analog zu der Vorrichtung 301 gemäß FIG 3 ausgebildet. Der Übersicht halber sind der Signalsender 307, der Signalempfänger 309 und die Verarbeitungseinrichtung 311 in der FIG 4 nicht gezeigt.

Die beiden Leckwellenleiter 303 und 305 der Vorrichtung 301 gemäß FIG 4 sind als Fortbildung zu der Vorrichtung 301 gemäß FIG 3 als ein koaxiales Schlitzkabel ausgebildet. Das heißt also insbesondere, dass ein Koaxialkabel als ein Schlitzkabel ausgebildet ist. Insofern umfassen die beiden Leckwellenleiter 303 und 305 jeweils einen Innenleiter 401 und einen Außenleiter 403. In dem Außenleiter 403 sind Öffnungen oder Schlitze 405 gebildet, durch welche bevorzugt zumindest ein Teil des eingespeisten Sendesignals abgestrahlt werden kann. Insofern haben beide Leckwellenleiter 303 und 305 eine Antennen- oder Richtcharakteristik, die symbolisch mittels einer Antennenkeule mit dem Bezugszeichen 407 dargestellt ist.

Die beiden Leckwellenleiter 303 und 305 sind insbesondere derart angeordnet, dass sie mit ihrer Hauptabstrahlrichtung in Richtung des Fahrzeugbodens 413 zeigen. Das heißt also insbesondere, dass ein Hauptanteil der abgestrahlten Energie von dem ersten Leckwellenleiter 303 in Richtung des Fahrzeugbodens 413 abgestrahlt wird. Dies ist mittels eines Pfeils mit dem Bezugszeichen 415 symbolisch dargestellt. Der von dem Fahrzeugboden 413 reflektierte Teil ist symbolisch mit einem Pfeil mit dem Bezugszeichen 417 dargestellt. Diese Richtung entspricht im Wesentlichen der Hauptrichtung der Antennenkeule 407, sodass die abgestrahlte Sendeenergie indirekt über den Fahrzeugboden 413 in den zweiten Leckwellenleiter 305 eingekoppelt werden kann.

Der Grundanteil an abgestrahlter Sendeenergie, der direkt in den zweiten Leckwellenleiter 305 eingekoppelt wird, ist symbolisch mittels eines Pfeils mit dem Bezugszeichen 419 gekennzeichnet.

Da sich die beiden Leckwellenleiter 303 und 305 unterhalb der Parkfläche 409 befinden, erfährt das dem Grundanteil 419 entsprechende Signal eine relativ starke Dämpfung bedingt durch ein Bodenmaterial des Parkplatzes und die Antennencharakteristik, deren Hauptrichtung in Richtung des Fahrzeugbodens 413 zeigt.

Der Anteil 415 und der reflektierte Anteil 417 der abgestrahlten Sendeenergie erfahren im Vergleich dazu eine geringe Dämpfung, da die entsprechenden Signale hauptsächlich sich in der Luft ausbreiten und auch nur eine relativ geringe Strecke im Boden zurücklegen müssen und weiterhin ist die Hauptrichtung der Antennencharakteristik entsprechend für einen guten Empfang ausgerichtet.

Für die folgenden Ausführungen kann der erste Leckwellenleiter als ein Sendeschlitzkabel bezeichnet werden. Der zweite Leckwellenleiter kann als ein Empfangsschlitzkabel bezeichnet werden.

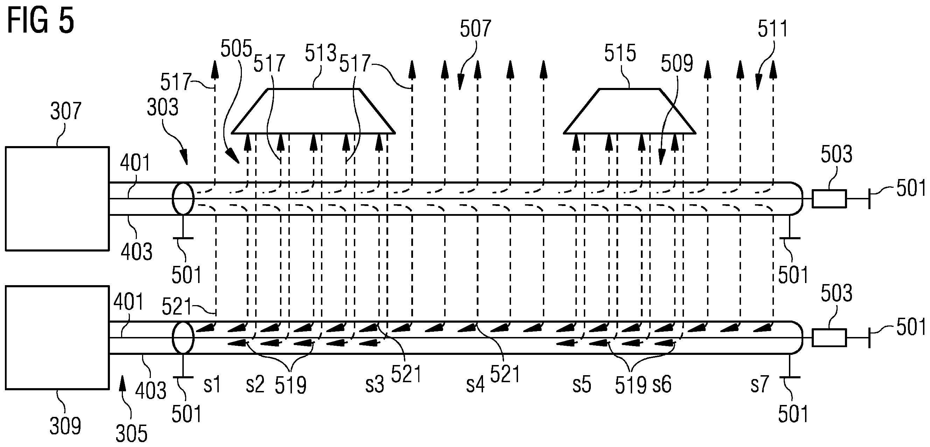

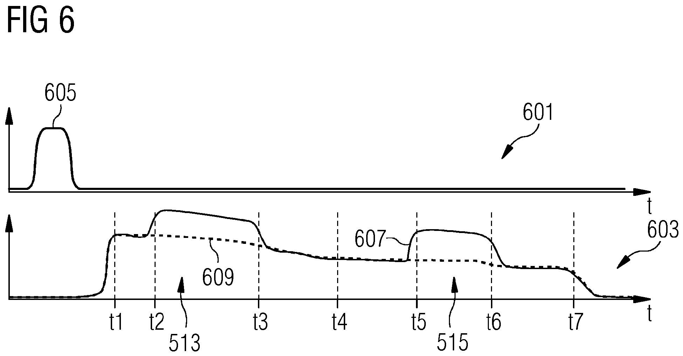

Das Verfahren beruht darauf, dass ein kurzer hochfrequenter Impuls, zum Beispiel mit einer Frequenz zwischen beispielsweise 3 MHz vorzugsweise 300 GHz, insbesondere zwischen 1 GHz und 100 GHz, und einer Länge zwischen vorzugsweise 30 ps und vorzugsweise 3 ns durch das Sendeschlitzkabel 303 vom Einspeisepunkt oder Einspeiseort bis zum Abschluss der Leitung oder des Sendeschlitzkabels 303 läuft, um dort in einem nicht gezeigten Abschlusswiderstand absorbiert zu werden. Während der gesamten Strecke tritt aber ein definierter Teil der eingespeisten Sendeenergie aus dem Sendeschlitzkabel 303 aus und strahlt in eine Umgebung. Wenn sich keine Fahrzeuge über den beiden Schlitzkabeln 303 und 305 befinden, wird nur ein kleiner Teil der vom konkreten Austrittsort auf dem direkten Weg das Empfangsschlitzkabel 305 erreichen, dort einkoppeln, um sich von diesem Einkoppelpunkt innerhalb des Schlitzkabels in beide Richtungen (in Richtung seiner beiden Enden) auszubreiten. Die Energie, die im Empfangsschlitzkabel 305 in Richtung des Schlitzkabelendes läuft, wird dort von einem nicht gezeigten Abschlusswiderstand absorbiert, der zweite Teil läuft im Schlitzkabel zurück Richtung Empfänger (vgl. FIG 5, die das Ausbreiten, Abstrahlen und Einkoppeln der Signale symbolisch zeigt.). Aus der Laufzeit dieses Signals (also dem Empfangssignal) im Empfangsschlitzkabel 305 kann auf die Entfernung, die zwischen Sende-/Empfangsstation, also dem Signalsender und dem Signalempfänger, (Schlitzkabelanfang) und dem konkreten Koppelpunkt zwischen den beiden Schlitzkabeln 303 und 305 besteht, und aus der jeweiligen Amplitude des Empfangssignals auf die Koppeldämpfung der beiden Schlitzkabel am konkreten Koppelpunkt geschlossen werden (vgl. FIG 6, die entsprechende zeitliche Signalverläufe zeigt.). Nachdem die beiden Schlitzkabel 303 und 305 kontinuierlich über die gesamte Wegstrecke koppeln, kommt im Signalempfänger ein Empfangssignal zurück, aus dessen Amplitude und Laufzeit auf die konkrete Koppeldämpfung der beiden Schlitzkabel 303 und 305 am konkreten Koppelpunkt geschlossen werden kann. Die Laufzeit ist dabei abhängig von der Wegstrecke vom Signalsender zum Auskoppelpunkt, über das Freifeld vom Auskoppelpunkt des Sendeschlitzkabels 303 zum Einkoppelpunkt des Empfangsschlitzkabels 305 und über das Empfangsschlitzkabel 305 zum Sendeempfänger sowie der jeweiligen Ausbreitungsgeschwindigkeit. Die Amplitude ist insbesondere abhängig von der Summe der Schlitzkabeldämpfung des Sendeschlitzkabels 303 bis zum Auskoppelpunkt, der Koppeldämpfung zwischen den beiden Schlitzkabeln 303 und 305 und der Schlitzkabeldämpfung des Empfangsschlitzkabels 305 vom Einkoppelpunkt bis zum Signalempfänger.

Befindet sich ein Fahrzeug über den beiden Schlitzkabeln 303 und 305, so ändert sich die Koppeldämpfung zwischen den beiden Schlitzkabeln 303 und 305 in diesem Abschnitt deutlich, da dann neben dem Signal, das direkt vom Sendeschlitzkabel 303 zum Empfangsschlitzkabel 305 strahlt, auch noch das am Fahrzeugboden 413 reflektierte Signal das Empfangsschlitzkabel 305 erreicht und dort einkoppelt. Durch entsprechend räumlich angebrachte Öffnungen 405 in den Schlitzkabeln 303 und 305 kann eine Richtwirkung der abgestrahlten respektive empfangenen Leistung ausgebildet werden, die das auf dem direkten Weg laufende Signal möglichst stark dämpft, wohingegen der Weg in Richtung eines möglichen Fahrzeugbodens 413 in der Richtung mit dem größten Antennengewinn liegt. Damit erhält man die größte Amplitudenänderung des Empfangssignals bei Anwesenheit eines reflektierenden Fahrzeugs.

FIG 5 zeigt mehrere Parkplätze 505, 507, 509 und 511 und zwei Fahrzeuge 513, 515. Das Fahrzeug 513 parkt auf dem Parkplatz 505. Das Fahrzeug 515 parkt auf dem Parkplatz 509. Insofern sind diese beiden Parkplätze belegt. Die restlichen Parkplätze 507 und 511 sind nicht belegt oder unbelegt.

Unterhalb einer nicht gezeigten Park- oder Stellfläche der Parkplätze 505, 507, 509 und 511 sind zwei Schlitzkabel 303 und 305 vorgesehen, die analog zu den beiden Schlitzkabeln gemäß FIG 4 gebildet sind und insofern einen Innenleiter 401 und einen Außenleiter 403 mit Öffnungen aufweisen. An dem Schlitzkabel 303 ist ein Signalsender 307 an einem Ende des Schlitzkabels 303 angeordnet. Entsprechend ist an einem Ende des zweiten Schlitzkabels 305 ein Signalempfänger 309 angeordnet. An dem weiteren Ende des ersten Schlitzkabels 303 ist ein Abschlusswiderstand 503 vorgesehen, der die Leitung abschließt. Entsprechend ist ein Abschlusswiderstand 503 auch an dem weiteren Ende des Schlitzkabels 305 vorgesehen. Gestrichelte Pfeile mit dem Bezugszeichen 517 kennzeichnen symbolisch einen Anteil an abgestrahlter Energie in Richtung der Park- oder Stellfläche der einzelnen Parkplätze. Gestrichelte Pfeile mit dem Bezugszeichen 519 kennzeichnen symbolisch einen von den Fahrzeugen 513, 515 reflektierten Anteil an abgestrahlter Energie. Gestrichelte Pfeile mit dem Bezugszeichen 521 kennzeichnen symbolisch einen Anteil an abgestrahlter Energie, der direkt, also ohne Reflexion an Fahrzeugen, in das zweite Schlitzkabel 305 eingekoppelt wird. Das Bezugszeichen 501 kennzeichnet Masseanschlüsse des Abschlusswiderstands 503 respektive der beiden Außenleiter 403.

Mit S1 bis S7 sind Orte entlang der beiden Schlitzkabel 303 und 305 gekennzeichnet.

FIG 6 zeigt einen Graphen 601, der einen zeitlichen Verlauf eines Sendeimpulses darstellt. FIG 6 zeigt des Weiteren einen Graphen 603, der einen zeitlichen Verlauf von Empfangssignalen darstellt. Aufgetragen ist bei beiden Graphen auf der Abszisse die Zeit t und auf der Ordinate eine Amplitude des jeweiligen Signals. Die Zeiten t1 bis t7 entsprechen respektive den Orten S1 bis S7 gemäß FIG 5.

Das Bezugszeichen 605 kennzeichnet den zeitlichen Verlauf des Sendeimpulses. Das Bezugszeichen 607 kennzeichnet den zeitlichen Verlauf des Empfangssignals, wenn die beiden Fahrzeuge 513 und 515 entsprechend der symbolischen Darstellung gemäß FIG 5 auf den entsprechenden Parkplätzen parken. Die gestrichelte Kurve mit dem Bezugszeichen 609 kennzeichnet eine Referenzkurve, die einem gemessenen Empfangssignal entspricht, wenn die Parkplätze 505, 507, 509 und 511 gemäß FIG 5 nicht belegt sind.

Um Unregelmäßigkeiten der Umgebungsbeschaffenheit (unterschiedliche Untergründe bzw. Füllmaterial, in der Nähe verlegte metallische Leitungen etc., schwankende Verlegetiefe ...) auszugleichen, kann gemäß einer nicht gezeigten Ausführungsform vorgesehen sein, dass bei Inbetriebnahme ein Profil des Empfangssignals zu messen und als Referenz hinterlegt oder abgespeichert wird. Mit dieser werden im Betrieb alle weiteren Empfangssignale verglichen und bei Abweichungen der Amplitude eine Belegung des entsprechenden Streckenabschnittes dem Parkplatzüberwachungssystem als belegt signalisiert.

Um Umwelteinflüsse wie Nässe oder Schnee auszugleichen, kann in einer nicht gezeigten Ausführungsform ein Korrekturwert zur Referenz ermittelt werden. Dazu wird das Empfangssignal rechnerisch über die gesamte Signallänge mit einem konstanten Wert in der Weise korrigiert, bis das korrigierte Signal an den Stellen mit geringster Amplitude dem Referenzsignal entspricht. An Stellen mit geringer Signalamplitude befindet sich kein Fahrzeug und können somit zur Korrektur von Umwelteinflüssen verwendet werden.

Um den Einfluss möglicherweise vorhandener hochfrequenter Störsignale abzuschwächen respektive die gegenseitige Beeinflussung mit anderen technischen Systemen zu minimieren, wird erfindungsgemäß von Sendeimpuls zu Sendeimpuls sowohl der zeitliche Abstand (Wiederholfrequenz) als auch die Sendefrequenz (Frequenzhopping) geändert werden. Mit entsprechenden Auswertealgorithmen kann anschließend auf Plausibilität der einzelnen Empfangssignale geprüft und eine Belegung der Parkplätze ermittelt werden.

Zur weiteren Erhöhung der Störsicherheit kann in einer nicht gezeigten Ausführungsform die Referenzkurve, die bei Inbetriebnahme ermittelt und abgespeichert wird, bei verschiedenen Frequenzen gemessen und jeweils abgespeichert werden, um später auftretende frequenzselektive Störungen erkennen und ausblenden zu können.

Die Erfindung umfasst also insbesondere den Gedanken, im Boden, also unter der Parkfläche eines Parkplatzes, unter den zu überwachenden Parkplätzen Schlitzkabel zu verlegen, die es erlauben, durch ein hochfrequentes Feld den Raum über der verlegten Strecke auf Anwesenheit von Metall und/oder elektrisch leitenden Gegenständen zu überwachen. Dies geschieht durch zwei verlegte HF-Schlitzkabel, die insbesondere im Wesentlichen parallel verlegt sein können, deren Abschirmung, entgegen der von normalen HF-Kabeln, nicht hochfrequenzmäßig möglichst dicht sind, sondern eine definierte Durchlässigkeit haben. Es ist ein hochfrequenter Signalsender vorgesehen, der kurze HF-Signale in eines der beiden Kabel einspeist. Ferner ist ein Signalempfänger vorgesehen, der ein aus dem zweiten Kabel zurückkommendes Signal misst. Eine Verarbeitungseinrichtung bewertet das gemessene Signal und bestimmt basierend auf der Bewertung den Belegungszustand des Parkplatzes respektive der Parkplätze.

Es wird also die unterschiedliche Kopplungsdämpfung von Schlitzkabeln genutzt, die stark von den in der Nähe befindlichen reflektierenden Materialien abhängt. Sind der Signalsender und der Signalempfänger auf derselben Seite, also am selben Ende, der verwendeten Schlitzkabel angeschlossen, so kann über die Laufzeit auf den Koppelort und über die Amplitude auf die Anwesenheit eines Reflektors, insbesondere eines Fahrzeugs, geschlossen werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zum Erfassen eines Belegungszustands eines Parkplatzes (411), wobei der Parkplatz (411) einen ersten und einen zweiten Leckwellenleiter (303, 305) umfasst, umfassend die folgenden Schritte:
- Einspeisen (101) eines Sendesignals (605) aufweisend eine vorbestimmte Sendeenergie in den ersten Leckwellenleiter (303), so dass zumindest ein Teil der Sendeenergie von dem ersten Leckwellenleiter (303) in eine Umgebung des ersten Leckwellenleiters (303) abgestrahlt wird, wobei der Teil an abgestrahlter Sendeenergie zumindest teilweise in den zweiten Leckwellenleiter (305) eingekoppelt wird, so dass sich im zweiten Leckwellenleiter (305) ein auf der eingekoppelten Sendeenergie basierendes Empfangssignal (607) ausbreitet,
- Messen (103) des Empfangssignals und
- Bestimmen (105) des Belegungszustandes
basierend auf dem gemessenen Empfangssignal (607),
wobei bei einem bekannten Belegungszustand das Sendesignal (605) eingespeist (201) und das Empfangssignal (607) als Referenzsignal gemessen (203) wird, wobei bei einem unbekannten Belegungszustand das Referenzsignal mit dem gemessenen Empfangssignal (607) verglichen wird und abhängig von dem Vergleich der Belegungszustand bestimmt wird,
wobei zum Erfassen des Belegungszustandes mehrere Sendesignale (605) mit verschiedenen zeitlichen Abständen in den ersten Leckwellenleiter (303) eingespeist werden und entsprechend mehrere sich im zweiten Leckwellenleiter (305) ausbreitende Empfangssignale (607) gemessen werden, wobei der Belegungszustand basierend auf den mehreren gemessenen Empfangssignalen (607) bestimmt wird.

2. Verfahren nach Anspruch 1, wobei bei einem unbekannten Belegungszustand das gemessene Empfangssignal (607) über seine Signallänge mit einem konstanten Wert derart korrigiert, bis das korrigierte Empfangssignal an zumindest einem lokalen Minimum dem Referenzsignal entspricht.

3. Verfahren nach einem der vorherigen Ansprüche, wobei zum Erfassen des Belegungszustandes mehrere Sendesignale (605) mit verschiedenen Sendefrequenzen in den ersten Leckwellenleiter (303) eingespeist werden und entsprechend mehrere sich im zweiten Leckwellenleiter (305) ausbreitende Empfangssignale (607) gemessen werden, wobei der Belegungszustand basierend auf den mehreren gemessenen Empfangssignalen (607) bestimmt wird.

4. Verfahren nach einem der vorherigen Ansprüche soweit rückbezogen auf Anspruch 1, wobei bei dem bekannten Belegungszustand mehrere Sendesignale (605) mit verschiedenen Sendefrequenzen eingespeist werden und entsprechende Empfangssignale (607) als Referenzsignale gemessen werden, wobei bei einem unbekannten Belegungszustand mehrere Sendesignale (605) mit den Frequenzen der Sendesignale (605) bei der Messung für die Referenzsignale eingespeist werden, so dass entsprechend mehrere Empfangssignale (607) gemessen werden, die mit den Referenzsignalen entsprechend der Sendefrequenz verglichen werden, wobei abhängig von den Vergleichen der Belegungszustand bestimmt wird.

5. Vorrichtung (301) zum Erfassen eines Belegungszustands eines Parkplatzes (411), umfassend:
- einen ersten und einen zweiten Leckwellenleiter (303, 305),
- einen Signalsender (307) zum Einspeisen eines Sendesignals (605) aufweisend eine vorbestimmte Sendeenergie in den ersten Leckwellenleiter (303), so dass zumindest ein Teil der Sendeenergie von dem ersten Leckwellenleiter (303) in eine Umgebung des ersten Leckwellenleiters (303) abgestrahlt wird, wobei der abgestrahlte Teil an Sendeenergie zumindest teilweise in den zweiten Leckwellenleiter (305) eingekoppelt wird, so dass sich im zweiten Leckwellenleiter (305) ein auf der eingekoppelten Sendeenergie basierendes Empfangssignal (607) ausbreitet,
- einen Signalempfänger (309) zum Messen des Empfangssignals (607) und
- eine Verarbeitungseinrichtung zum Bestimmen des Belegungszustands basierend auf dem gemessenen Empfangssignal (607),
wobei die Verarbeitungseinrichtung (311) ausgebildet ist, das gemessene Empfangssignal (607) mit einem bei einem bekannten Belegungszustand gemessenen Referenzsignal zu vergleichen, um abhängig von dem Vergleich den Belegungszustand zu bestimmen"
wobei der Signalsender (307) ausgebildet ist, zum Erfassen des Belegungszustandes mehrere Sendesignale (605) mit verschiedenen zeitlichen Abständen in den ersten Leckwellenleiter (303) einzuspeisen, wobei der Signalempfänger (309) ausgebildet ist, entsprechend mehrere sich im zweiten Leckwellenleiter (305) ausbreitende Empfangssignale (607) zu messen, wobei die Verarbeitungseinrichtung (311) ausgebildet ist, den Belegungszustand basierend auf den mehreren gemessenen Empfangssignalen (607) zu bestimmen.

6. Vorrichtung (301) nach Anspruch 5, wobei die Verarbeitungseinrichtung (311) ausgebildet ist, das gemessene Empfangssignal (607) über seine Signallänge mit einem konstanten Wert derart zu korrigieren, bis das korrigierte Empfangssignal an zumindest einem lokalen Minimum dem Referenzsignal entspricht.

7. Vorrichtung (301) nach einem der Ansprüche 5 bis 6, wobei der Signalsender (307) ausgebildet ist, zum Erfassen des Belegungszustandes mehrere Sendesignale (605) mit verschiedenen Sendefrequenzen in den ersten Leckwellenleiter (303) einzuspeisen, wobei der Signalempfänger (309) ausgebildet ist, entsprechend mehrere sich im zweiten Leckwellenleiter (305) ausbreitende Empfangssignale (607) zu messen, wobei die Verarbeitungseinrichtung (311) ausgebildet ist, den Belegungszustand basierend auf den mehreren gemessenen Empfangssignalen (607) zu bestimmen.

8. Vorrichtung (301) nach einem der Ansprüche 5 bis 7, wobei zumindest einer der beiden Leckwellenleiter ein Schlitzkabel ist.

9. Vorrichtung (301) nach einem der Ansprüche 6 bis 8, wobei die Verarbeitungseinrichtung (311) ausgebildet ist, den Signalsender (307) und den Signalempfänger (309) zu steuern.

10. Computerprogramm, umfassend Programmcode zur Durchführung des Verfahrens nach einem der Ansprüche 1 bis 4, wenn das Computerprogramm auf der Verarbeitungseinrichtung (311) der Vorrichtung (301) nach Anspruch 9 ausgeführt wird.

## Claims

1. Method for detecting an occupancy state of a parking space (411), the parking space (411) including a first and a second leaky waveguide (303, 305), including the following steps:
- feeding (101) a transmit signal (605) comprising a predetermined transmit energy into the first leaky waveguide (303), so that at least a part of the transmit energy is radiated into an environment of the first leaky waveguide (303) from the first leaky waveguide (303), wherein the part of radiated transmit energy is at least partly coupled into the second leaky waveguide (305), so that a receive signal (607) based on the coupled-in transmit energy expands inside the second leaky waveguide (305),
- measuring (103) the receive signal and
- determining (105) the occupancy state based on the measured receive signal (607),
wherein, in a known occupancy state, the transmit signal (605) is fed-into (201) and the receive signal (607) is measured (203) as reference signal, wherein, in an unknown occupancy state, the reference signal is compared to the measured receive signal (607) and the occupancy state is determined depending on the comparison,
wherein, in order to detect the occupancy state, several transmit signals (605) with various temporal gaps are fed into the first leaky waveguide (303), and correspondingly several receive signals (607) expanding within the second leaky waveguide (305) are measured, wherein the occupancy state is determined based on the several measured receive signals (607).

2. The method of claim 1, wherein, in an unknown occupancy state, the measured receive signal (607) corrects over its signal length with a constant value in such a manner, until the corrected receive signal corresponds to the reference signal at least at a local minimum.

3. The method of any of the previous claims, wherein, in order to detect the occupancy state, several transmit signals (605) with various transmit frequencies are fed into the first leaky waveguide (303), and correspondingly several receive signals (607) expanding within the second leaky waveguide (305) are measured, wherein the occupancy state is determined based on the several measured receive signals (607).

4. The method of any of the previous claims, when depending on claim 1, wherein, in the known occupancy state, several transmit signals (605) with various transmit frequencies are fed-into and corresponding receive signals (607) are measured as reference signals, wherein, in an unknown occupancy state, several transmit signals (605) with the frequencies of the transmit signals (605) at the measuring for the reference signals are fed-into, such that, correspondingly, several receive signals (607) are measured, which are compared with the reference signals corresponding to the transmit frequency, wherein the occupancy state is determined depending on the comparisons.

5. A device (301) for detecting an occupancy state of a parking space (411), including:
- a first and a second leaky waveguide (303, 305)
- a signal transmitter (307) for feeding a transmit signal (605) comprising a predetermined transmit energy into the first leaky waveguide (303), so that at least a part of the transmit energy is radiated into an environment of the first leaky waveguide (303) from the first leaky waveguide (303), wherein the radiated part of transmit energy is at least partly coupled into the second leaky waveguide (305), so that a receive signal (607) based on the coupled-in transmit energy expands inside the second leaky waveguide (305),
- a signal receiver (309) for measuring the receive signal (607) and
- a processing device for determining the occupancy state based on the measured receive signal (607),
wherein the processing device (311) is configured to compare the measured receive signal (607) with a reference signal measured in a known occupancy state, in order to determine the occupancy state depending on the comparison,
wherein the signal transmitter (307) is configured to, in order to detect the occupancy state, feed several transmit signals (605) with various temporal gaps into the first leaky waveguide (303), wherein the signal receiver (309) is configured to correspondingly measure several receive signals (607) expanding within the second leaky waveguide (305), wherein the processing device (311) is configured to determine the occupancy state based on the several measured receive signals (607).

6. The device (301) of claim 5, wherein the processing device (311) is configured to correct the measured receive signal (607) over its signal length with a constant value in such a manner, until the corrected receive signal corresponds to the reference signal at least at a local minimum.

7. The device (301) of any of claims 5 to 6, wherein the signal transmitter (307) is configured to, in order to detect the occupancy state, feed several transmit signals (605) with various transmit frequencies into the first leaky waveguide (303), wherein the signal receiver (309) is configured to correspondingly measure several receive signals (607) expanding within the second leaky waveguide (305), wherein the processing device (311) is configured to determine the occupancy state based on the several measured receive signals (607).

8. The device (301) of any of claims 5 to 7, wherein at least one of the two leaky waveguides is a leaky feeder.

9. The device (301) of any of claims 6 to 8, wherein the processing device (311) is configured to control the signal transmitter (307) and the signal receiver (309).

10. A computer program, including program code for carrying out the method of any of claims 1 to 4, when the computer program is executed on the processing device (311) of the device (301) of claim 9.

## Revendications

1. Procédé de détection d'un état d'occupation d'une aire de stationnement (411), l'aire de stationnement (411) comprenant un premier et un second guide d'ondes à fuites (303, 305), comprenant les étapes consistant à :
- introduire (101) un signal de transmission (605) ayant une énergie de transmission prédéterminée dans ledit premier guide d'ondes à fuites (303) de sorte qu'au moins une partie de ladite énergie de transmission est rayonnée dudit premier guide d'ondes à fuites (303) vers un environnement dudit premier guide d'ondes à fuites (303), la partie de l'énergie de transmission rayonnée étant au moins partiellement couplée dans le deuxième guide d'ondes à fuites (305), de sorte qu'un signal de réception (607) basé sur l'énergie de transmission couplée se propage dans le deuxième guide d'ondes à fuites (305),
- mesurer (103) le signal de réception et
- déterminer (105) l'état d'occupation sur la base du signal de réception mesuré (607),
dans lequel, lors d'un état d'occupation connu, le signal de transmission (605) est introduit (201) et le signal de réception (607) est mesuré (203) en tant que signal de référence, le signal de référence étant comparé au signal de réception mesuré (607) lors d'un état d'occupation inconnu et l'état d'occupation étant déterminé en fonction de la comparaison,
dans lequel une pluralité de signaux d'émission (605) avec des intervalles de temps différents sont introduits dans le premier guide d'ondes à fuites (303) afin de détecter l'état d'occupation, et
une pluralité de signaux de réception (607) se propageant dans le second guide d'ondes à fuites (305) est mesurée en conséquence, l'état d'occupation étant déterminé sur la base desdits plusieurs signaux de réception mesurés (607).

2. Procédé selon la revendication 1, dans lequel, lors d'un état d'occupation inconnu, le signal de réception mesuré (607) corrige sa longueur de signal avec une valeur constante de sorte que le signal de réception corrigé corresponde au signal de référence à au moins un minimum local.

3. Procédé selon l'une des revendications précédentes, dans lequel, pour détecter l'état d'occupation, une pluralité de signaux d'émission (605) avec des fréquences d'émission différentes sont introduits dans le premier guide d'ondes à fuites (303) et une pluralité de signaux de réception (607) se propageant dans le second guide d'ondes à fuites (305) est mesurée, l'état d'occupation étant déterminé basé sur la pluralité des signaux de réception mesurés (607).

4. Procédé selon l'une des revendications précédentes lors qu'elles dépendent de la revendication 1, dans lequel, dans l'état d'occupation connu, une pluralité de signaux d'émission (605) avec de différentes fréquences d'émission sont introduits et des signaux de réception correspondants (607) sont mesurés en tant que des signaux de référence, dans lequel, lors d'une état d'occupation inconnu, une pluralité de signaux d'émission (605) ayant les fréquences des signaux d'émission (605) sont introduits pendant la mesure des signaux de référence, de sorte qu'une pluralité de signaux de réception (607) qui sont comparés aux signaux de référence correspondant à la fréquence d'émission est mesurée, l'état d'occupation étant déterminé en fonction des comparaisons.

5. Dispositif (301) pour détecter un état d'occupation d'une aire de stationnement (411), comprenant :
- un premier et un seconde guide d'ondes à fuites (303, 305),
- un émetteur de signal (307) pour introduire un signal de transmission (605) comprenant une énergie de transmission prédéterminée dans le premier guide d'ondes à fuites (303) de sorte qu'au moins une partie de l'énergie de transmission est rayonnée du premier guide d'ondes à fuites (303) vers un environnement du premier guide d'ondes à fuites (303), la partie émise de l'énergie de transmission étant au moins partiellement couplée dans le deuxième guide d'ondes à fuites (305), de sorte qu'un signal de réception (607) basé sur l'énergie de transmission couplée se propage dans le deuxième guide d'ondes à fuites (305),
- un récepteur de signal (309) pour mesurer le signal de réception (607) et
- un moyen de traitement pour déterminer l'état d'occupation sur la base du signal de réception mesuré (607),
dans lequel le moyen de traitement (311) est agencé pour comparer le signal de réception mesuré (607) avec un signal de référence mesuré à un état d'occupation connu, pour déterminer l'état d'occupation en fonction de la comparaison,
dans lequel l'émetteur de signaux (307) est agencé, afin de détecter l'état d'occupation, pour l'introduction d'une pluralité de signaux de transmission (605) à différents intervalles de temps dans le premier guide d'ondes à fuites (303), le récepteur de signaux (309) étant agencé pour mesurer en conséquence une pluralité de signaux de réception (607) se propageant dans le second guide d'ondes à fuites (305),
dans lequel le moyen de traitement (311) est agencé pour déterminer l'état d'occupation basé sur lesdits plusieurs signaux de réception (607) mesurés.

6. Dispositif (301) selon la revendication 5, dans lequel le moyen de traitement (311) est agencé pour corriger le signal de réception mesuré (607) sur toute sa longueur de signal avec une valeur constante, de sorte que le signal de réception corrigé corresponde au moins à un minimum local au signal de référence.

7. Dispositif (301) selon l'une des revendications 5 à 6, dans lequel l'émetteur de signaux (307) est agencé pour introduire une pluralité de signaux de transmission (605) ayant de différentes fréquences de transmission dans le premier guide d'ondes à fuites (303) pour détecter l'état d'occupation, le récepteur de signaux (309) étant agencé pour mesurer, en conséquence, plusieurs signaux de réception (607) se propageant dans le second guide d'ondes à fuites (305), les moyens de traitement (311) étant agencés pour déterminer l'état d'occupation sur la base desdits plusieurs signaux de réception mesurés (607).

8. Dispositif (301) selon l'une des revendications 5 à 7, dans lequel au moins l'un des deux guides d'ondes à fuite est un câble à fente.

9. Dispositif (301) selon l'une des revendications 6 à 8, dans lequel le moyen de traitement (311) est agencé pour commander l'émetteur de signal (307) et le récepteur de signal (309).

10. Programme d'ordinateur comprenant un code de programme pour exécuter le procédé selon l'une quelconque des revendications 1 à 4 lorsque le programme d'ordinateur est exécuté sur le moyen de traitement (311) du dispositif (301) selon la revendication 9.
